# EUROPEAN PATENT APPLICATION

(11) **EP 1 746 764 A2**
(43) Date of publication of application: **24.01.2007**
(21) Application number: 06015237.8
(22) Date of filing: 21.07.2006
(51) Int. Cl.: H04L 12/24

(54) **Universal security management system, device and method for network management**

(30) Priority: 21.07.2005 CN 200510036123
(71) Applicant: Huawei Technologies Co., Ltd., Longgang District, Shenzhen, Guangdong 518129 (CN)
(72) Inventor: Yang Bo, 518129 Huawei Administration Bld.,, Guangdong Province 581129 (CN)
(74) Representative: Epping - Hermann - Fischer

(57) **Abstract**

The present invention relates to network management technologies for communication systems, and discloses a security management system, device and method for network management of communication devices, implementing a centralized, universal security management for network management in a communication network which includes network devices provided by various manufacturers. In the present invention, the network devices, that is, function entities, provided by different device manufacturers, are divided into different security domains; in each security domain there is arranged at least one security management gateway which is adapted to adapt a security management interface in the security domain to a universal security management interface; through which universal security management interface the centralized security management for the function entities in the whole network by a security management center can be achieved. Moreover, there is provided a security management user interface to the security administrator. The security management system of the present invention runs through four work flows, i.e., user management, user authorization, user verification, and user authentication. Both the security management gateway and the function entities are logical entities.

## Description

### Field of the Invention

The present invention relates to network management technologies for communication systems, and particularly to security management system, device and method for network management of communication devices.

### Background of the Invention

With the arrival of the information times and the rapid development of national economy, building speed of communication networks, particularly of mobile communication networks is striking, and the number of mobile users has exploded. The expansion of the network scale, the incessant renovation of new technologies, and the increase of the different vendors' network elements cause the difficulty of network management increased, and the requirement on Network Management System (NMS) is also higher and higher. In order to manage the modern communication networks scientifically, bring the scale benefit thereof into play, and implement centralized management and uniform control, each carrier builds a Network Management System for its own network.

The Network Management System is generally responsible for monitoring, configuring and fault diagnosing of network devices. The main functions of a Network Management System include automatic topology discovery, remote configuration, performance parameter monitoring, and fault diagnosis. Various Network Management Systems are mainly developed by two kinds of enterprises; one is the universal network management software providers, and the other is the respective network device providers who provide network management solutions with respect to their own products.

A specific Network Management System designed by a device manufacturer for its own products has very comprehensive functions of monitoring and configuration for its own products, which is capable of monitoring some important performance specifications that can't be monitored by the universal Network Management System, and also has some particular configuration functions. But such a specific Network Management System is helpless to other manufacturers' network devices.

Security management is an important part of network management, which mainly implements management of account information and rights of network administrators, guaranteeing secure accesses and operations to the network devices by the legal network management users, and preventing operations without authorization. Security management includes functions, such as authorization, user verification, access control and security logging, etc. A reliable security management mechanism has a vital effect on the whole Network Management System, and even on the security and reliability of the whole network.

In a large-scale communication network, especially in a carrier's network, because of the network development and the service diversification, it is generally unavoidable that there are various devices or systems provided by multiple device manufacturers. In order to ensure safe running, these devices or systems all provide their independent Network Management Systems, which surely also include security management systems. However, as mentioned above, since the Network Management Systems or the security management systems of different device manufacturers' devices or systems are not compatible and collaborative with each other, a centralized user management, right management and identity verification within the whole network can't be implemented.

However, carriers of large-scale networks urgently need a centralized whole-network security management system which is universal to devices of various device manufacturers, so that centralized user management, right management and identity verification can be made for Network Management Systems (or modules) of all devices or systems within the whole network, so as to decrease the operating difficulty of the communication network and to improve the security thereof.

At present, there is no related technical solution, which can implement a centralized whole-network security management for network management of a communication network which involves devices produced by various manufacturers. This situation is a serious obstacle for the development of communication networks, the incensement of network service quality, and the improvement of network security.

### Summary of the Invention

The present invention provides a universal security management system for network management, device and method, which implements a centralized, universal security management for network management in a communication network which includes network devices provided by various manufacturers.

According to one aspect of the present invention, there is provided a universal security management system for network management, comprising a Security Management Center (SMC), at least one Function Entity (FE) and at least one Security Management Gateway (SMG); wherein
the whole network is divided into at least one Security Domain (S-Domain), each Security Domain comprising at least one said Function Entity; and
each said Security Domain corresponds to at least one said Security Management Gateway which is adapted to adapt a Security Management Interface (SMI) of the at least one Function Entity in the Security Domain to a Universal Security Management Interface (USMI) provided by the Security Management Center.

Wherein, the universal security management system for network management according to a preferred embodiment further comprises a Security Management User Interface (SMUI) which is adapted to provide a user interface of security management to the administrator based on the Security Management Center.

According to a further preferred embodiment of said system, the Security Management Center is adapted to manage user information, authorization information and identity verification information of the whole network,
to interact with the Function Entities in the whole network through the Security Management Gateways of the Security Domains, and
to interact with the administrator through the Security Management User Interface.

According to a further preferred embodiment of said system, the Function Entity is adapted to forward user verification requests to the Security Management Gateway of the Security Domain the Function Entity pertains to, to download the right information of the user currently logging in from the Security Management Center through the Security Management Gateway and buffer the right information, to authenticate a user operation according to the right information, and to clear the buffer of the right information at the time of the user's logout or according to pre-configured policies.

According to a further preferred embodiment of said system, the Security Management Gateway interacts with all the Function Entities in the Security Domain the Security Management Gateway pertains to through the Security Management Interface of the Security Domain, and interacts with the Security Management Center through the Universal Security Management Interface, for forwarding the user verification requests sent by the Function Entities to the Security Management Center, and forwarding the right information sent by the Security Management Center to the Function Entities.

In another aspect of the present invention, there is also provided a universal security management system for network management, comprising a Security Management Center (SMC), at least one Function Entity (FE) and at least one Security Management Gateway (SMG); wherein
said at least one Function Entity is adapted to process user services;
said Security Management Center is adapted to implement the security management of the whole network; and
said at least one Security Management Gateway each corresponds to at least one Function Entity, which is adapted to implement a data interaction between the Security Management Center and the at least one Function Entity the Security Management Gateway corresponds to.

According to a preferred embodiment of said system, the Security Management Gateway interacts with the corresponding Function Entity through a Security Management Interface (SMI) of the Function Entity, and interacts with the Security Management Center through a Universal Security Management Interface (USMI) provided by the Security Management Center.

In a further aspect of the present invention, there is provided a Security Management Gateway (SMG) for network management, which corresponds to at least one Function Entity (FE), and implements an interaction between the Function Entity and a Security Management Center (SMC) of a Network Management System (Network Management System), comprising:
a Function Entity interaction unit, adapted to implement a data interaction with the Function Entity;
a Security Management Center interaction unit, adapted to implement a data interaction with the Security Management Center; and
a processing unit, adapted to implement the adaptation of the data transmitted between the Function Entity interaction unit and the Security Management Center interaction unit.

According to a preferred embodiment of said gateway the Function Entity interaction unit interacts with the corresponding Function Entity through the Security Management Interface of the Function Entity; the Security Management Center interaction unit interacts with the Security Management Center through a Universal Security Management Interface provided by the Security Management Center.

According to a preferred embodiment of said gateway the processing unit comprises:
a verification request processing unit, adapted to convert a user verification request received by the Function Entity interaction unit from the Function Entity, and then to send the converted user verification request to the Security Management Center through the Security Management Center interaction unit; and
a right information processing unit, adapted to convert a user verification result received by the Security Management Center interaction unit from the Security Management Center, and then to send the converted user verification result to the Function Entity through the Function Entity interaction unit.

In yet another aspect of the present invention, there is provided a Security Management Center (SMC), comprising a Universal Security Management Interface (USMI), wherein the Security Management Center further comprises:
a Function Entity interaction unit, adapted to implement a data interaction with a Function Entity (FE); and
an adaptation unit, adapted to implement an adaptation of the data transmitted between the Universal Security Management Interface and the Function Entity interaction unit.

In yet another aspect of the present invention, there is provided a Function Entity (FE) of a security management system for network management, comprising a Security Management Interface (SMI); wherein the Function Entity further comprises:
a Security Management Center interaction unit, adapted to implement a data interaction with a Security Management Center (SMC); and
an adaptation unit, adapted to implement an adaptation of the data transmitted between the Security Management Interface and the Security Management Center.

According to yet another aspect of the present invention, there is provided a method for user management of a universal security management system for network management, comprising the following steps of
receiving, through a Security Management User Interface (SMUI), a user management operation request from an administrator, and sending the user management operation request to a Security Management Center (SMC);
processing, at the Security Management Center, the user management operation request, and returning a processing result to the Security Management User Interface; and
displaying the processing result, by the Security Management User Interface, on a user interface.

In yet another aspect of the present invention, there is provided a method for user authorization of a universal security management system for network management, comprising the following steps of
receiving, through a Security Management User Interface (SMUI), a user authorization operation request from an administrator, and sending the user authorization operation request to a Security Management Center (SMC);
obtaining, by the Security Management Center, the information of authorizable operating type and authorizable operating object from a Security Management Gateway (SMG), and returning the information of authorizable operating type and authorizable operating object to the Security Management User Interface;
displaying, by the Security Management User Interface, the information of authorizable operating type and authorizable operating object on an administrator interface for the administrator's reference when the administrator performs an authorization operation;
sending, through the Security Management User Interface, the user authorization operation request to the Security Management Center after the authorization operation is accomplished by the administrator;
processing, at the Security Management Center, the authorization operation, saving the user authorization information, and returning a processing result to the Security Management User Interface; and
displaying, by the Security Management User Interface, the processing result on an administrator interface.

In yet another aspect of the present invention, there is also provided a method for user authorization of a universal security management system for network management, comprising the following steps of
obtaining, by a Security Management Center (SMC), information of authorizable operating type and authorizable operating object from a Security Management Gateway (SMG) each time the Security Management Center starts up, and saving the information by the Security Management Center in local;
initiating, by the Security Management Gateway, a synchronizing procedure with the Security Management Center after each time of the update and the modification of the Security Management Gateway, so as to maintain the synchronization of the information of authorizable operating type and authorizable operating object between the Security Management Gateway and the Security Management Center;
performing, by the administrator, an authorization operation according to the information of authorizable operating type and authorizable operating object provided by the Security Management Center;
sending, through a Security Management User Interface (SMUI), an authorization operation request to the Security Management Center after the authorization operation;
processing, at the Security Management Center, the authorization operation, saving the user authorization information, and returning a processing result to the Security Management User Interface; and
displaying, by the Security Management User Interface, the processing result on an administrator interface.

In yet another aspect of the present invention, there is provided a method for user verification of a universal security management system for network management, comprising the following steps of
receiving, by a Function Entity (FE), a user verification request, and sending the user verification request to a Security Management Gateway (SMG) of the Security Domain (S-Domain) that the Function Entity pertains to, and forwarding, by the Security Management Gateway, the user verification request to a Security Management Center (SMC);
processing, at the Security Management Center, the user verification request and then returning a verification result and user right information to the Security Management Gateway, and forwarding, by the Security Management Gateway, the verification result and the user right information to the Function Entity; and
buffering, by the Function Entity, the user right information in local until the user logs out or a time limit expires.

According to a preferred embodiment of said method for user verification of a universal security management system for network management, the step of receiving by the Function Entity the user verification request further comprises determining, by the Function Entity, whether to forward the user verification request or not according to pre-configured local policies; if it is yes, forwarding the user verification request to the Security Management Gateway, otherwise directly processing the user verification request in local; before the step of buffering by the Function Entity the user right information in local.

According to a further preferred embodiment of said method for user verification of a universal security management system for network management, the method further comprises determining, by the Function Entity, whether to buffer the user right information or not according to the pre-configured local policies.

In yet another aspect of the present invention, there is provided a method for user authentication of a universal security management system for network management, comprising the following steps of
authenticating, by a Function Entity (FE), a user operation according to user right information buffered in local, and executing the user operation, by the Function Entity, after passing the authentication; and
clearing, by the Function Entity, the locally buffered user right information according to pre-configured policies when the user logs out or a time limit expires.

It can be seen by comparing that the technical solution of the present invention differs from the prior art mainly in that the network devices, that is, function entities, provided by different device manufacturers, are divided into different security domains; in each security domain there is arranged at least one security management gateway which is adapted to adapt a security management interface in the security domain to a universal security management interface; through which universal security management interface the centralized security management for the function entities in the whole network by a security management center can be achieved; moreover, there is provided a security management user interface to the security administrator;
the security management system of the present invention runs through four work flows, i.e., user management, user authorization, user verification, and user authentication;
the interaction between different function entities and the security management center is implemented through the security management gateway; and
the forwarding of the user verification request, the downloading and buffering of the user right information is implemented by improving the function entity.

The difference between the technical solutions brings comparatively obvious beneficial effect, that is, the provision of the security management center and the universal security management interface implements the basis of the centralized security management, and the division of the security domains and the adaptation of the security management gateway implements the universal management for the different function entity in the whole network; therefore, a centralized user management, right management and user verification mechanisms can be achieved by using a uniform approach, without large-scale modifications to the existing devices, thus simplifying the network management, avoiding the confusion due to the variance of multiple security management interface, and improving the security and reliability of the network.

### Brief Description of the Drawings

The objects, technical solutions and advantages of the present invention will become apparent with reference to the following detailed description of the present invention in conjunction with the accompanying drawings, wherein:
Fig.1 is a block diagram of the universal security management system for network management according to an embodiment of the present invention;
Fig.2 is a flow diagram of the user management operation of the universal security management system for network management according to an embodiment of the present invention;
Fig.3 is a flow diagram of the user authorization operation of the universal security management system for network management according to an embodiment of the present invention;
Fig.4 is a flow diagram of the user verification operation of the universal security management system for network management according to an embodiment of the present invention;
Fig.5 is a flow diagram of the user authentication operation of the universal security management system for network management according to an embodiment of the present invention;
Fig.6 is a block diagram of the security management gateway for network management according to an embodiment of the present invention.
Fig.7 is a block diagram of the security management center for network management according to an embodiment of the present invention.
Fig.8 is a block diagram of the function entity for network management according to an embodiment of the present invention.

### Detailed Description of the Embodiments

For implementing a centralized security management for network management in a network constituted by devices provided by multiple manufacturers, which has the functions, such as authorization, verification and authentication of network management users, the main idea of the present invention is: to divide the network devices, i.e., function entities, within the whole network into different security domains, each of which includes multiple function entities and at least one security management gateway, according to the manufacturers of the network devices or to the security management interfaces supported by the network devices; the security management gateway is adapted to adapt security management interfaces of the function entities in the security domains to a normal interface provided by a security management center; the so-called security management center is the part implementing centralized user management, right management and identity verification, which also provides a user interface to a system administrator through a security management user interface.

In the embodiments of the present invention, the system administrator, that is, the administrator, is the person who is responsible for the management of the rights of the operators or of the network management users in the whole network, and the network management users, i.e., the users, are the operators who implement network management of the whole network through operations on the function entities. The administrator implements management of the users and their right information at the security management center through the security management user interface, and the security management center implements interaction with different function entities through the respective security management gateways of the security domains.

The running of the security management system for network management according to the embodiments of the present invention comprises four flows as follows: user management, that is, the administrator managing the user information by directly operating a user database at the security management center; user authorization, that is, the administrator authorizing a user at the security management center, wherein the authorizing comprising that the security management center inquiring the security management gateways about the information of authorizable operations and providing the information to the administrator as a reference; user verification, that is, when a user logs in a function entity prior to his performing of a network management operation, the function entity sending a verification request to the security management center, and the security management center authenticating the user and returning a verification result, and if the verification is successful, the verification result returned by the security management center containing the user right information at the same time and the function entity buffering the user right information; user authentication, that is, the function entity authenticating each operation of the user according to the local buffered right information of the user, and making a decision.

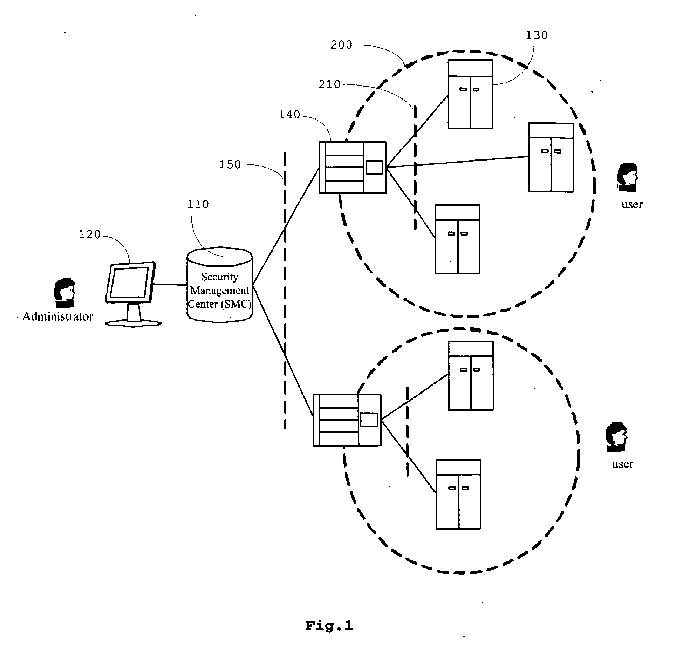

The following will give a detailed description on the technical details of the universal security management system for network management according to the embodiments of the present invention. As shown in Fig.1, the main structure of the security management system includes Security Management Center (SMC) 110, Security Management User Interface (SMUI) 120, Function Entities (FE) 130 made by multiple different manufacturers and Security Management Gateways (SMG) 140 adapted for adaptation. In an embodiment of the present invention, the interconnection relationship of these components is shown in Fig.1.

The Function Entities 130 in the whole network are divided into different Security Domains (S-Domains) 200 according to their manufacturers. Each of Security Domains 200 includes a corresponding Security Management Gateway 140, which is adapted to adapt the Security Management Interface (SMI) 210 of the Function Entities in the Security Domain to a Universal Security Management Interface (USMI) 150 provided by the Security Management Center 110. It can be seen that Security Domain is a concept of dividing the carrier's whole network as viewed from security management. One Security Domain includes devices provided by a certain device manufacturer. The Security Domain interacts with the external completely through the Security Management Gateway 140.

The Function Entity 130 here generally refers to a physical or logical entity providing some network services in the network. These Function Entities 130 are all under the management of the Network Management System, receiving operations from users to implement network management. Before accessing any Function Entity 130, a user needs to be subjected to user identity verification; and after passing the user identity verification, the user needs to be subjected to an access authentication in conjunction with the user identity in each access.

Security Management Center 110 is adapted to implement the user management, the right management and the identity verification of the whole network, which is a module that manages the users in the whole network centrally. And Security Management User Interface 120 provides a user interface such as Graphic User Interface (GUI), Command Line Interface (CLI), and WEB Portal, etc. to the administrator based on the Security Management Center.

From Fig.1, it can be seen that the whole network is divided into multiple Security Domains 200, each of which generally includes the Function Entities 130 only provided by the same manufacturer. In each Security Domain 200, there is arranged a Security Management Gateway 140, which is mainly responsible for adapting the manufacturer-specific Security Management Interface 210 to the Universal Security Management Interface 150 provided by the carrier's centralized Security Management Center. The Security Management Gateway 140 is an adaptation module for each Security Domain 200 with the Security Management Center 110; and the Function Entities 130 in the Security Domains need to forward user identity verification requests and to download user right information through the Security Management Gateway 140. A uniform Security Management Center 110 is arranged in the whole network domain, which provides the Universal Security Management Interface 150 to implement centralized user management, right management and identity verification of the whole network, and interacts with the Security Management Gateway 140 of each Security Domain 200 to process the identity verification requests forwarded by the Security Management Gateway 140 and to send the user right information downward. At the same time, the Security Management Center 110 also receives the administrator's management operation on the user data through the Security Management User Interface 120.

The necessary functions needed to be implemented in each of the above components will be further described in the following.

The Function Entity 130 first receives the user operation, forwarding the user verification request to the Security Management Gateway 140 of the Security Domain that the Function Entity 130 pertains to when the user logs in, and then the user verification request will be sent upward to the Security Management Center 110 by the Security Management Gateway 140; at the same time, the Function Entity 130 also downloads the right information of the user presently logging from the Security Management Center 110 through the Security Management Gateway 140 and buffering the right information at the local; in this way, the Function Entity 130 can authenticate the user operation according to the buffered right information each time the user operates, and clear the buffer of the right information according to a pre-configured policy each time the user logs out or the valid time limit expires, which can ensure the user right information is again downloaded and updated from the Security Management Center 110 when the user logs in next time.

The main function of the Security Management Gateway 140 is to adapt the specific Security Management Interface 210 inside the Security Domain to the Universal Security Management Interface 150 outside the Security Domain. The Security Management Gateway 140 interacts with all the Function Entities 130 through the specific Security Management Interface 210 within the Security Domain that the Security Management Gateway 140 pertains to, and interacts with the Security Management Center 110 through the Universal Security Management Interface 150 outside said Security Domain. in this way, the Security Management Gateway 140 can forward the requests sent upward by the Function Entities 130 which include the user verification requests sent by the Function Entities 130 to the Security Management Center 110, and also forward the user information sent downward by the Security Management Center 110 which include the user right information sent by the Security Management Center 110 to the Function Entities 130. The Security Management Gateway 140 is a key component for implementing the universal security management.

The Security Management Center 110 is the carrier of the uniform centralized management of the whole network, adapted to manage the user information, the authorization information and the identity verification information of the whole network. There is a whole-network user information database stored on the Security Management Center 110; and the administrator only needs to operate on the database to implement the operations on users pertaining to different Security Domains in the whole network. All the Function Entities 130 need to download and update the user information from the Security Management Center 110 in order to implement the verification and the authentication. On one side the Security Management Center 110 interacts with Function Entities 130 within the whole network through the respective Security Management Gateways 140 of the Security Domains, and on the other side the Security Management Center 110 interacts with the administrator through the Security Management User Interface 120.

The following will explain how to implement the functions of the above-mentioned components and the cooperation their between according to the four basic work flows of the universal security management system. The four basic work flows include user management, user authorization, user verification and user authentication, wherein the user management and the user authorization are top-down management operations to the users on the administrator side, and the user verification and the user authentication are bottom-up request procedures of requesting verification and authentication on the user side when the users log in.

User management refers to the operations performed by the administrator directly on the user database at the Security Management Center, including the operations, such as Add User, Delete User, Modify user information, etc.

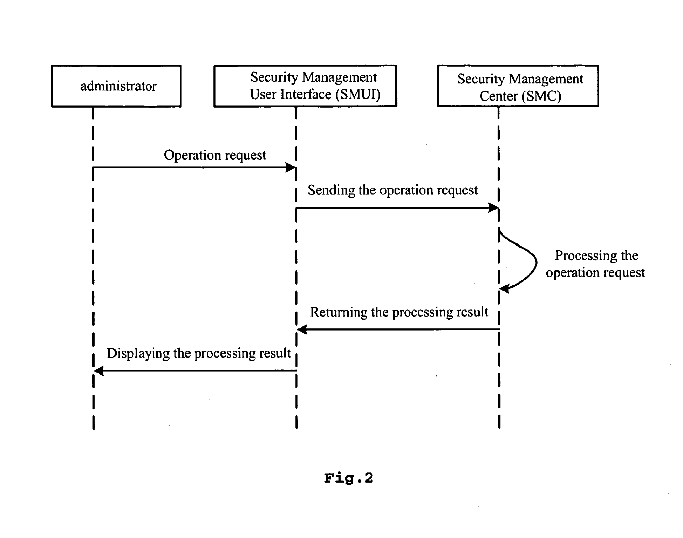

In an embodiment of the present invention, the modules and the work flow involved in these user management operations are shown as Fig.2. First, the operation request initiated by the administrator is received at the user interface of the Security Management User Interface, and then forwarded to the Security Management Center; the Security Management Center processes the request, that is, it performs the user management operation, and returns the processing result to the Security Management User Interface; finally, the Security Management User Interface displays the processing result on the user interface.

User authorization refers to the operations, such as adding rights for user, and modifying user rights by the administrator.

The rights of a user define the types and the objects of the operations performed by the user on the Function Entities. For example, access right of a user for files on Function Entities should be described as: what operating rights on which files the user possesses, such as Add, Delete, and Modify, etc. Therefore, users' right information should include at least two parts information, i.e., "operating type" and "operating object".

Although as viewed from the administrator, the user authorization is similar with the user management; they both send operation requests downward through the Security Management User Interface, and after the processing by the Security Management Center, receive operation results. But with respect to the internal processing procedure of the system, the user authorization has one more flow compared with the user management, that is, the Security Management Center needs to inquire the Security Management Gateway about the information of the authorizable operating types and operating objects, and presents the information on the authorization user interface for the administrator's reference, such that the administrator can implement the user authorization. It is surly possible that the Security Management Gateway need to further inquire the Function Entity about the information of the "operating type" and the "operating object", which is omitted in the description of the embodiment of the present invention.

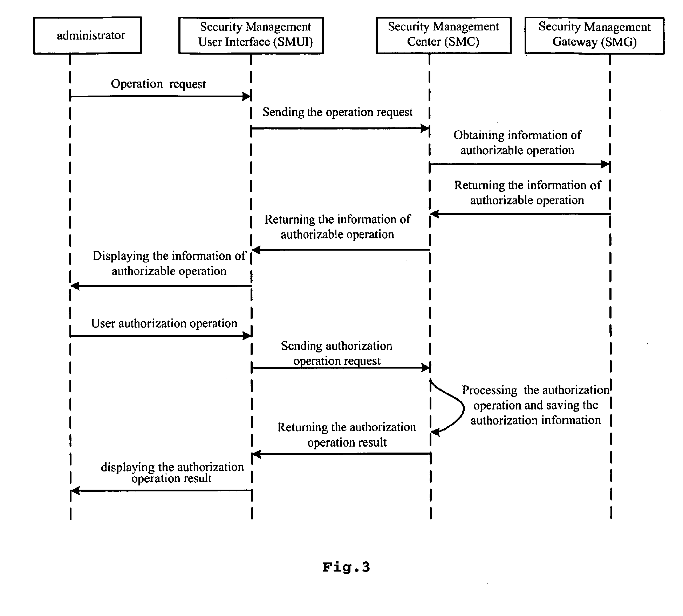

In an embodiment of the present invention, the modules and the work flow involved in these user authorization operations are shown as Fig.3. First, the administrator operates on the user interface, and the user authorization operation request of the administrator is received at the Security Management User Interface and then sent to the Security Management Center through the Security Management User Interface; then, the Security Management Center obtains information of authorizable operating types and operating objects from the Security Management Gateway, and returns the information to the Security Management User Interface; then, the information of the authorizable operation type and operating object is displayed on the administrator interface through the Security Management User Interface for the administrator's reference. In this way, the first half flow is completed, and now the administrator can choose how to authorize the user according to the selecting of the provided authorizable information; and after the authorization operation, the authorization operation request is sent to the Security Management Center through the Security Management User Interface in return; then, the Security Management Center processes the authorization operation, saves the user authorization information, and returns the processing result to the Security Management User Interface; finally, the processing result is displayed on the administrator's interface through the Security Management User Interface.

It is noticed that in the above flow the Security Management Center needs to inquire the Security Management Gateways each time of the user authorization, which, in another embodiment of the present invention, is simplified by saving the authorizable information at the Security Management Center and setting up a synchronization mechanism with the Security Management Gateway. In the work flow of the user authorization, the Security Management Center obtains the information of authorizable operating type and operating object from the Security Management Gateway and saves the information in local each time of initiating; and after that, the Security Management Gateway initiates a synchronization procedure to the Security Management Center after each time of updating and modifying the information, so as to maintain the synchronization of the information of the authorizable operating type and operating object between the Security Management Gateway and the Security Management Center. In this way, the inconvenience of inquireing the Security Management Center each time of authorization operation is avoided, saving the operating time.

User verification and user authorization refer to the operation procedure that after a user logs in a certain Function Entity when performing network management operation, the Function Entity needs to obtain the user information for authenticating from the uniform user database of whole network, i.e. from the Security Management Center; and after that, the Function Entity makes an authentication decision according to the user information each time the user operates. In this way, an apparent mechanism is that the Function Entities in the whole network all authenticate the users through the Security Management Center and download the user right information from the Security Management Center, and the interaction between the Function Entities and the Security Management Center in this mechanism is adapted through the Security Management Gateway. In addition, in this mechanism, the Function Entities also need to buffer the user information, which not only speeds up the authentication, but also ensures the timely update of the user right information; therefore, the Function Entities need to ensure that the user information is downloaded renewedly at the time of log in and cleared at the time of log out.

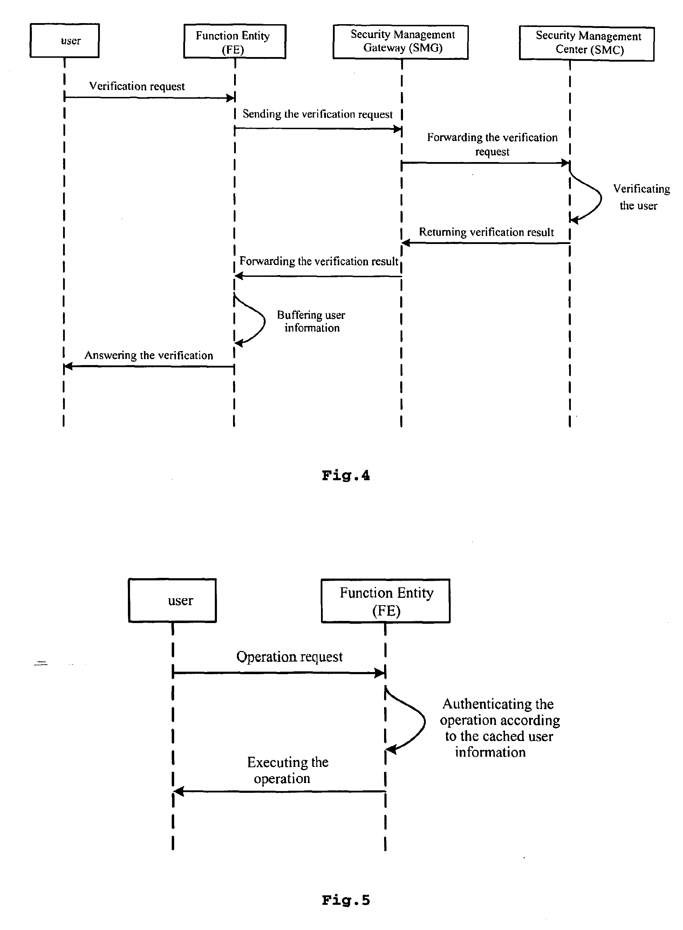

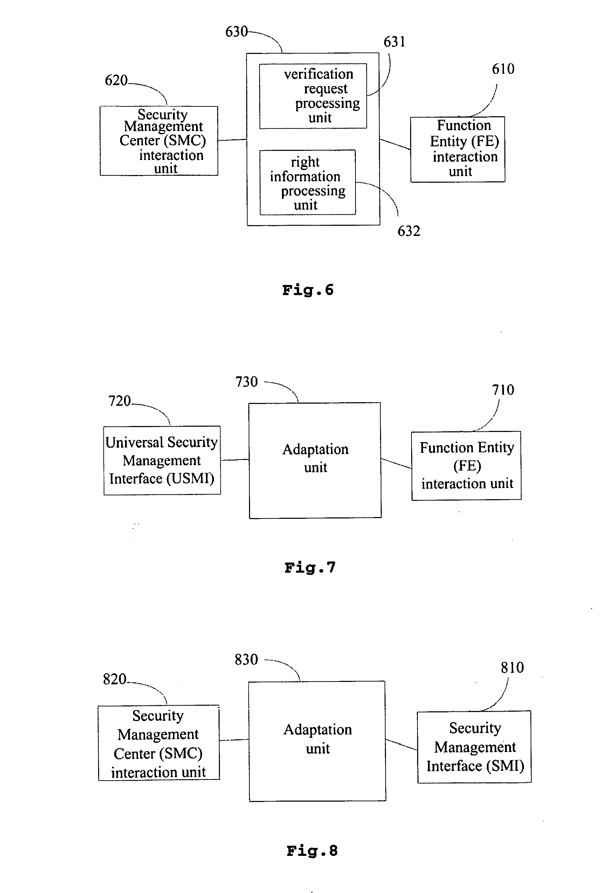

Fig.4 and Fig.5 respectively illustrate the work flows of the user verification and the user authentication according to the embodiments of the present invention.

First, the user logs in an Function Entity, at which time the user provides identity identifiers such as user name and verification information such as password, digit Certificate so as to verify its identity; the Function Entity receives the user verification request and forwards the request to the Security Management Gateway in the Security Domain the Function Entity pertains to; the Security Management Gateway forwards the user verification request to the Security Management Center; then, the Security Management Center processes, the user verification request, that is, to perform the user verification, and return the user right information to the Security Management Gateway, which further forwards the information to the Function Entity; after that, the Function Entity obtains the user verification result and the user right information, and buffers the user right information in local until the user logs out or the time limit expires.

In the above interaction procedure, the key point is that the Function Entity can forward the verification request according to the local configured policy, and save the user right information returned from the Security Management Gateway. Only when the Function Entity implements the forwarding of the verification request and the buffering of the user right information returned from the Security Management Gateway, the centralized security management mechanism can be implemented.

When an operation session ends, the Function Entity clears its saved user right information, and downloads the user right information renewedly at the time of next login, so as to keep the user right updated timely.

After the user verification is accomplished, each operation of the user needs to be authenticated. The user authentication refers to that the Function Entity authenticates the user operation according to the locally buffered user right information, to determine whether to allow the user to perform the operation. The content of the authentication includes "operating type" and "operating object", and only when the user has both the rights, he is considered to have the right for the operation. As shown in Fig.5, the Function Entity authenticates the user operation according to the locally buffered user right information, and executes the operation after the user passes the authentication; and clears the locally buffered user right information according to the pre-configured policy.

Thus, the four work flows are implemented by means of the function systems of the components and the cooperation thereof, which not only provides the information management of the users in the whole network by the administrator, but also provides the necessary verification and authentication mechanism when the user operates the Function Entities in the whole network.

It should be noted that for the purpose of simplification, there is one Security Management Gateway in each Security Domain in the above embodiments; but the present invention should not be limited to this, that is, each Security Domain can have multiple Security Management Gateways. To those skilled in the art, it is comprehensive that there are no essential difference between the implementation with multiple Security Management Gateways and the implementation with one Security Management Gateway, and therefore, the description of the implementation of multiple Security Management Gateways will not be described here.

It should be furthermore noted that said devices or entities, such as the Security Management Center, the Security Management Gateway, the Function Entity, etc. all refer to the logic entities. And in implementing, each logic entity can be implemented in a single physical device, or multiple logical entities can be implemented in the same physical device.

Through dividing the whole network into security domains and adding an Security Management Gateway in each security domain, the carrier can implement centralized user management, right management and user verification mechanisms using a uniform approach according to the embodiments of the present invention, without large-scale modifications to the existing devices, thus simplifying the network management, avoiding the confusion due to the variance of multiple system right information, and improving the security and reliability of the network.

The Security Management Gateway of an embodiment of the present invention corresponds to at least one Function Entity, and implements the interaction between said Function Entity and the Security Management Center of Network Management System. Referring to Fig.6, in an embodiment of the present invention, the Security Management Gateway includes:
the Function Entity interaction unit 610, adapted to implement the data interaction with the Function Entities;
the Security Management Center interaction unit 620, adapted to implement the data interaction with the Security Management Center; and
the processing unit 630, adapted to implement the adaptation of data transmitted between the Function Entity interaction unit and the Security Management Center interaction unit.

Wherein the Function Entity interaction unit 610 interacts with the corresponding Function Entities through the Security Management Interface (not shown in the figure) of the Function Entities; the Security Management Center interaction unit 630 interacts with the Security Management Center through the Universal Security Management Interface (not shown in the figure) provided by the Security Management Center.

In the embodiment of the present invention, the processing unit 630 includes:
the verification request processing unit 631, adapted to convert the user verification requests received by the Function Entity interaction unit 610 from the Function Entities, and send the converted requests to the Security Management Center through the Security Management Center interaction unit 620; and
the right information processing unit 632, adapted to convert the user verification results received by the Security Management Center interaction unit 620 from the Security Management Center, and send the converted results to the Function Entities through the Function Entity interaction unit 610.

Moreover, according to an embodiment of the present invention, the Security Management Gateway can be arranged at the Security Management Center, or inside each of the Function Entities.

When the Security Management Gateway is arranged at the Security Management Center, the Security Management Center according an embodiment of the present invention includes: the Universal Security Management Interface 720, the Function Entity interaction unit 710 adapted to implement data interaction with the Function Entities, and the adaptation unit 730 adapted to implement the adaptation of the data transmitted between the Universal Security Management Interface and the Function Entity interaction unit, as shown in Fig.7.

When the Security Management Gateway is arranged at the Function Entity, the Function Entity according to an embodiment of the present invention includes: the Security Management Interface 810, the Security Management Center interaction unit 820 adapted to implement the data interaction with the Security Management Center, and the adaptation unit 830 adapted to implement the adaptation of the data transmitted between the Security Management Interface and the Security Management Center, as shown in Fig.8.

Although the present invention has been illustrated and described with reference to the preferred embodiments of the present invention, those skilled in the art should understand that various changes in forms and details can be made without departing from the spirit and the scope of the present invention.

## Claims

1. A universal security management system for network management, comprising a Security Management Center (SMC), at least one Function Entity (FE) and at least one Security Management Gateway (SMG); wherein
the whole network is divided into at least one Security Domain (S-Domain), each Security Domain (S-Domain) comprising at least one said Function Entity (FE); and
each said Security Domain (S-Domain) corresponds to at least one said Security Management Gateway (SMG) which is adapted to adapt a Security Management Interface (SMI) of the at least one Function Entity (FE) in the Security Domain (S-Domain) to a Universal Security Management Interface (USMI) provided by the Security Management Center (SMC).

2. The system according to claim 1, further comprising a Security Management User Interface (SMUI) which is adapted to provide a user interface of security management to the administrator based on the Security Management Center (SMC).

3. The system according to claim 2, wherein the Security Management Center (SMC) is adapted
to manage user information, authorization information and identity verification information of the whole network,
to interact with the Function Entities (FE) in the whole network through the Security Management Gateways (SMG) of the Security Domains (S-Domain), and
to interact with the administrator through the Security Management User Interface (SMUI).

4. The system according to any one of claims 1 to 3, wherein the Function Entity (FE) is adapted
to forward user verification requests to the Security Management Gateway (SMG) of the Security Domain the Function Entity (FE) pertains to,
to download the right information of the user currently logging in from the Security Management Center (SMC) through the Security Management Gateway (SMG) and buffer the right information,
to authenticate a user operation according to the right information,
and to clear the buffer of the right information at the time of the user's logout or according to pre-configured policies.

5. The system according to any one of claims 1 to 3, wherein the Security Management Gateway (SMG) interacts with all the Function Entities (FE) in the Security Domain the Security Management Gateway (SMG) pertains to through the Security Management Interface (SMI) of the Security Domain (S-Domain), and interacts with the Security Management Center (SMC) through the Universal Security Management Interface (USMI), for forwarding the user verification requests sent by the Function Entities (FE) to the Security Management Center (SMC), and forwarding the right information sent by the Security Management Center (SMC) to the Function Entities (FE).

6. A universal security management system for network management, comprising a Security Management Center (SMC), at least one Function Entity (FE) and at least one Security Management Gateway (SMG); wherein
said at least one Function Entity (FE) is adapted to process user services;
said Security Management Center (SMC) is adapted to implement the security management of the whole network; and
said at least one Security Management Gateway (SMG) each corresponds to at least one Function Entity (FE), which is adapted to implement a data interaction between the Security Management Center (SMC) and the at least one Function Entity (FE) the Security Management Gateway (SMG) corresponds to.

7. The system according to claim 6, wherein the Security Management Gateway (SMG) interacts with the corresponding Function Entity (FE) through a Security Management Interface (SMI) of the Function Entity (FE), and interacts with the Security Management Center (SMC) through a Universal Security Management Interface (USMI) provided by the Security Management Center (SMC).

8. A Security Management Gateway (SMG) for network management, which corresponds to at least one Function Entity (FE), and implements an interaction between the Function Entity (FE) and a Security Management Center (SMC) of a Network Management System (NMS), comprising:
a Function Entity interaction unit, adapted to implement a data interaction with the Function Entity (FE);
a Security Management Center interaction unit, adapted to implement a data interaction with the Security Management Center (SMC); and
a processing unit, adapted to implement the adaptation of the data transmitted between the Function Entity interaction unit and the Security Management Center interaction unit.

9. The Security Management Gateway (SMG) for network management according to claim 8, wherein the Function Entity interaction unit interacts with the corresponding Function Entity (FE) through the Security Management Interface (SMI) of the Function Entity (FE); the Security Management Center interaction unit interacts with the Security Management Center (SMC) through a Universal Security Management Interface (USMI) provided by the Security Management Center (SMC).

10. The Security Management Gateway for network management according to claim 8 or 9, wherein the processing unit comprises:
a verification request processing unit, adapted to convert a user verification request received by the Function Entity interaction unit from the Function Entity (FE), and then to send the converted user verification request to the Security Management Center (SMC) through the Security Management Center interaction unit; and
a right information processing unit, adapted to convert a user verification result received by the Security Management Center interaction unit from the Security Management Center (SMC), and then to send the converted user verification result to the Function Entity (FE) through the Function Entity interaction unit.

11. A Security Management Center (SMC), comprising a Universal Security Management Interface (USMI), wherein the Security Management Center (SMC) further comprises:
a Function Entity interaction unit, adapted to implement a data interaction with a Function Entity (FE); and
an adaptation unit, adapted to implement an adaptation of the data transmitted between the Universal Security Management Interface (USMI) and the Function Entity interaction unit.

12. A Function Entity (FE) of a security management system for network management, comprising a Security Management Interface (SMI); wherein the Function Entity (FE) further comprises:
a Security Management Center interaction unit, adapted to implement a data interaction with a Security Management Center (SMC); and
an adaptation unit, adapted to implement an adaptation of the data transmitted between the Security Management Interface (SMI) and the Security Management Center (SMC).

13. A method for user management of a universal security management system for network management, comprising the following steps of
receiving, through a Security Management User Interface (SMUI), a user management operation request from an administrator, and sending the user management operation request to a Security Management Center (SMC);
processing, at the Security Management Center (SMC), the user management operation request, and returning a processing result to the Security Management User Interface (SMUI); and
displaying the processing result, by the Security Management User Interface (SMUI), on a user interface.

14. A method for user authorization of a universal security management system for network management, comprising the following steps of
receiving, through a Security Management User Interface (SMUI), a user authorization operation request from an administrator, and sending the user authorization operation request to a Security Management Center (SMC);
obtaining, by the Security Management Center (SMC), the information of authorizable operating type and authorizable operating object from a Security Management Gateway (SMG), and returning the information of authorizable operating type and authorizable operating object to the Security Management User Interface (SMUI);
displaying, by the Security Management User Interface (SMUI), the information of authorizable operating type and authorizable operating object on an administrator interface for the administrator's reference when the administrator performs an authorization operation;
sending, through the Security Management User Interface (SMUI), the user authorization operation request to the Security Management Center (SMC) after the authorization operation is accomplished by the administrator;
processing, at the Security Management Center (SMC), the authorization operation, saving the user authorization information, and returning a processing result to the Security Management User Interface (SMUI); and
displaying, by the Security Management User Interface (SMUI), the processing result on an administrator interface.

15. A method for user authorization of a universal security management system for network management, comprising the following steps of
obtaining, by a Security Management Center (SMC), information of authorizable operating type and authorizable operating object from a Security Management Gateway (SMG) each time the Security Management Center (SMC) starts up, and saving the information by the Security Management Center (SMC) in local;
initiating, by the Security Management Gateway (SMG), a synchronizing procedure with the Security Management Center (SMC) after each time of the update and the modification of the Security Management Gateway (SMG), so as to maintain the synchronization of the information of authorizable operating type and authorizable operating object between the Security Management Gateway (SMG) and the Security Management Center (SMC);
performing, by the administrator, an authorization operation according to the information of authorizable operating type and authorizable operating object provided by the Security Management Center (SMC);
sending, through a Security Management User Interface (SMUI), an authorization operation request to the Security Management Center (SMC) after the authorization operation;
processing, at the Security Management Center (SMC), the authorization operation, saving the user authorization information, and returning a processing result to the Security Management User Interface (SMUI); and
displaying, by the Security Management User Interface (SMUI), the processing result on an administrator interface.

16. A method for user verification of a universal security management system for network management, comprising the following steps of
receiving, by a Function Entity (FE), a user verification request, and sending the user verification request to a Security Management Gateway (SMG) of the Security Domain (S-Domain) that the Function Entity (FE) pertains to, and forwarding, by the Security Management Gateway (SMG), the user verification request to a Security Management Center (SMC);
processing, at the Security Management Center (SMC), the user verification request and then returning a verification result and user right information to the Security Management Gateway (SMG), and forwarding, by the Security Management Gateway (SMG), the verification result and the user right information to the Function Entity (FE); and
buffering, by the Function Entity (FE), the user right information in local until the user logs out or a time limit expires.

17. The method according to claim 16, wherein the step of receiving by the Function Entity (FE) the user verification request further comprises:
determining, by the Function Entity (FE), whether to forward the user verification request or not according to pre-configured local policies; if it is yes, forwarding the user verification request to the Security Management Gateway (SMG), otherwise directly processing the user verification request in local.

18. The method according to claim 16, wherein before the step of buffering by the Function Entity (FE) the user right information in local, the method further comprises determining whether to buffer the user right information or not according to the pre-configured local policies.

19. A method for user authentication of a universal security management system for network management, comprising the following steps of
authenticating, by a Function Entity (FE), a user operation according to user right information buffered in local, and executing the user operation, by the Function Entity (FE), after passing the authentication; and
clearing, by the Function Entity (FE), the locally buffered user right information according to pre-configured policies when the user logs out or a time limit expires.
